**Europäisches Patentamt**

**European Patent Office**

**Office européen des brevets**

(11) Veröffentlichungsnummer: **0 308 647**

**A1**

(12) # EUROPÄISCHE PATENTANMELDUNG

(21) Anmeldenummer: **88113279.9**

(22) Anmeldetag: **16.08.88**

(51) Int. Cl.⁴: **H02K 1/28 , H02K 21/08**

(30) Priorität: **26.08.87 DE 3728490**

(43) Veröffentlichungstag der Anmeldung:
**29.03.89 Patentblatt 89/13**

(84) Benannte Vertragsstaaten:
**DE IT SE**

(71) Anmelder: **Siemens Aktiengesellschaft Berlin und München**
**Wittelsbacherplatz 2**
**D-8000 München 2(DE)**

(72) Erfinder: **Harbauer, Werner, Dipl.-Ing.**
**Flurstrasse 10**
**D-8702 Kürnach(DE)**
Erfinder: **Pieper, Wolfgang**
**Kirchbühlstrasse 4**
**D-8700 Würzburg(DE)**

(54) **Verfahren zur Herstellung eines Festsitzes zwischen einer Rotorwelle und einem umspritzten Rotationskörper.**

(57) Um auf einfache Weise nur unter weitestgehender Verwendung von Standard-Bauteilen einen eine sichere Momentenmitnahme gewährleistenden Festsitz zwischen der Rotorwelle und dem Rotationskörpers, insbesondere einem auf die Rotorwelle spritzgegossenen, an seinem Außenumfang einen Magnetring oder Magnetteilschalen aufnehmenden Kunststoff-Verbindungselement erreichen zu können, wird vorgeschlagen, auf eine gehärtete Standard-Rotor-Welle (1) eine materialweichere Stahl-Sechskantmutter (3) axial aufzupressen und mit dem Verbindungselement (2) zu umspritzen.

FIG 1

EP 0 308 647 A1

# Verfahren zur Herstellung eines Festsitzes zwischen einer Rotorwelle und einem umspritzen Rotationskörper ·

Die Erfindung bezieht sich auf ein Verfahren zur Herstellung eines Festsitzes zwischen einer Rotorwelle und einem umspritzten Rotationskörper gemäß Oberbegriff des Anspruches 1; ein derartiges Verfahren ist aus der DE-PS 28 45 702 bekannt.

Bei dem durch die DE-PS 28 45 702 bekannten Verfahren werden zur Vermeidung einer Relativbewegung zwischen der Rotorwelle und dem Verbindungselement in der Mitte des Rotors durch die Rotorwelle ein Stift geführt, der sich beidseitig radial bis in das Verbindungselement erstreckt oder bei einer Alternativausführung die Welle im Bereich der Nabe des Verbindungselementes mit gesonderten Längsrillen versehen und in der Mitte der Längsrillen der Rotorwelle ein Einstich angebracht, in den ein Fortsatz der Nabe eingreift. Dadurch soll das Verbindungselement in die Längsrillen als auch in den Einstich eindringen und somit einen sicheren Verdrehschutz gewährleisten.

Gemäß Aufgabe vorliegender Erfindung soll ein von Relativbewegungen freier, allen betriebsmäßigen Momentenmitnahmen genügender Festsitz zwischen der Rotorwelle und dem Verbindungselement lediglich unter Verwendung von handelsüblichen, zur Gewährleistung eines sicheren Verdrehschutzes keiner gesonderten Bearbeitung unterworfenen Bauteilen erreicht werden.

Die Lösung dieser Aufgabe gelingt bei einem Verfahren der eingangs genannten Art erfindungsgemäß durch die Lehre des Anspruches 1; vorteilhafte Ausgestaltungen der Erfindung sind jeweils Gegenstand der Unteransprüche.

Durch das erfindungsgemäße Verfahren erübrigt sich eine gesonderte Riffelung der Oberfläche der üblicherweise gehärteten Rotorwelle bzw. eine Anbringung eines Einstiches oder einer Stiftbohrung in dieser Rotorwelle, da sich einerseits beim axialen Aufpressen die Rotorwelle und das Zwischenstück durch Bildung von axial eingegrabenen Schleifspuren in dem Zwischenstück um ein gewisses Maß in tangentialer Belastungsrichtung formschlüssig verbinden und andererseits die sichere Mitnahme zwischen dem Zwischenstück und dem umspritzten Verbindungselement durch die spezifische Außenkontur des Zwischenelementes gewährleistet ist. Die Oberfläche der Rotorwelle bleibt dabei unbeeinflußt.

Zweckmäßigerweise wird bei Verwendung einer handelsüblichen gehärteten, ansonsten keiner im Sinne einer form- und/oder kraftschlüssigen Momentenmitnahme weiterer Bearbeitung unterworfenen Standard-Rotorwelle ein materialweicheres

Normteil, insbesondere eine handelsübliche Stahl-Sechskant- oder Stahl-Vierkantmutter, verwendet, wobei der Verdrehschutz um so besser wird, je größer das Untermaß zwischen dem Außendurchmesser der gehärteten Rotorwelle und dem Innendurchmesser des Bohrungsdurchmessers des Zwischenstückes im Bereich des axialen Preßsitzes ist.

Die Erfindung wird im folgenden anhand eines schematisch dargestellten Ausführungsbeispieles in der Zeichnung näher erläutert; darin zeigen:

FIG 1 einen axialen Längsschnitt durch den Rotor eines durch einen Ringmagneten erregten Elektrokleinmotors;

FIG 2 einen Schnitt durch den Rotor gemäß FIG 1 im Schnittverlauf II-II.

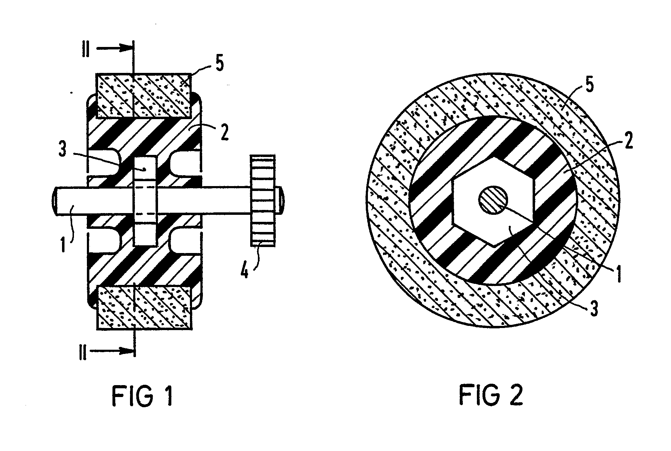

Auf eine, an ihrem rechten Ende mit einem Abtriebsritzel 4 versehene Rotorwelle 1 ist von ihrem linken Ende eine Stahl-Sechskantmutter 3 bis zu ihrer in FIG 1 dargestellten Position aufgedrückt. Die Rotorwelle 1 weist eine glatte, keine besondere, zur Sicherung eines Verdrehschutzes vorgesehene Spezial-Bearbeitung, z.B. in Form einer Riffelung oder eines Stiftloches mit eingesetztem Radialstift auf. Anschließend wird die Sechskantmutter 3 von dem Kunststoff-Verbindungselement 2 umgossen, das auch noch teilweise axial beidseitig der Stahl-Sechskantmutter 3 um die Rotorwelle 1 umspritzt ist. An seinem Außenumfang nimmt das Kunststoff-Verbindungselement 2 einen eingespritzten Ringmagneten 5 auf. Die Oberfläche der Rotorwelle 1 wird beim Aufdrücken der aus einem im Vergleich zur Oberfläche der Rotorwelle 1 weicheren Material bestehenden Stahl-Sechskantmutter 3 nicht beeinflußt.

## Ansprüche

1. Verfahren zur Herstellung eines Festsitzes zwischen einer Rotorwelle (1) und einem umspritzten Rotationskörper, insbesondere zwischen einer Elektromotor-Rotorwelle und einem auf die Rotorwelle spritzgegossenen, an seinem Außenumfang einen Magnetring (5) bzw. Magnetteilschalen aufnehmenden Kunststoff-Verbindungselement (2), **dadurch gekennzeichnet**, daß auf die Rotorwelle (1) ein Zwischenteil (Stahl-Sechskantmutter 3) mit einer von der Rundform abweichenden Außenkontur axial aufgepreßt und von dem Kunststoff-Verbindungselement (2) umspritzt wird.

2. Verfahren nach Anspruch 1, **gekennzeichnet** durch Verwendung einer handelsüblichen gehärteten, ansonsten keiner im Sinne einer form- und/oder kraftschlüssigen Momentenmitnahme mit dem Verbindungselement (2) weiteren Bearbeitung unterworfenen Standard-Rotorwelle (1) und eines gegenüber der gehärteten Rotorwelle (1) materialweicheren Metall-Normteils als Zwischenteil.

3. Verfahren nach Anspruch 1 und/oder 2, **gekennzeichnet** durch die Verwendung einer Stahl-Vierkant- bzw. Stahl-Sechskantmutter (3) als Zwischenteil.

4. Verfahren nach einem der Ansprüche 1-3, **gekennzeichnet** durch die Verwendung eines Zwischenteils (Stahl-Sechskantmutter 3) mit einem gegenüber dem Außendurchmesser der Rotorwelle (1) mit einem Untermaß versehenen Innendurchmesser des Bohrungsdurchmessers im Bereich des axialen Preßsitzes auf der Rotorwelle (1).

87 P 3303   E

FIG 1

FIG 2

Europäisches Patentamt

**EUROPÄISCHER RECHERCHENBERICHT**

Nummer der Anmeldung

EP 88 11 3279

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A-2 082 846 (OWEN et al.)<br>* Seite 2, Zeile 20 - Seite 3, Zeile 44; Figur *<br>--- | 1,3 | H 02 K 1/28<br>H 02 K 21/08 |
| Y | GB-A-2 130 811 (ADE et al.)<br>* Seite 3, Zeilen 97-122; Figuren 6-8 *<br>--- | 1,3 | |
| A | PATENT ABSTRACTS OF JAPAN, Band 9, Nr. 244 (E-346)[1967], 30. September 1985;<br>& JP-A-60 96 164 (FANUC K.K.)<br>29-05-1985<br>* Zusammenfassung *<br>--- | 1 | |
| A | FR-A-2 497 021 (BUCHER et al.)<br>* Seite 4, Zeile 1 - Seite 5, Zeile 24; Figuren *<br>--- | 1 | |
| A | WO-A-8 501 619 (JAUN)<br>* Seite 8, Zeilen 25-31; Figuren 1-5 *<br>----- | 1 | |

| RECHERCHIERTE SACHGEBIETE (Int. Cl.4) |
|---|
| H 02 K 1/00<br>H 02 K 21/00 |

Der vorliegende Recherchenbericht wurde für alle Patentansprüche erstellt

| Recherchenort | Abschlußdatum der Recherche | Prüfer |
|---|---|---|
| DEN HAAG | 01-12-1988 | LE GUAY P.A. |

EPO FORM 1503 03.82 (P0403)